(19) Europäisches Patentamt / European Patent Office / Office européen des brevets

(11) **EP 4 380 042 B1**

(12) **FASCICULE DE BREVET EUROPEEN**

(45) Date de publication et mention de la délivrance du brevet:
**21.05.2025  Bulletin 2025/21**

(21) Numéro de dépôt: **23212508.8**

(22) Date de dépôt: **28.11.2023**

(51) Classification Internationale des Brevets (IPC):
***H02S 50/10*** *(2014.01)*

(52) Classification Coopérative des Brevets (CPC):
**H02S 50/10**

(54) **PROCÉDÉ ET SYSTÈME DE RÉGLAGE ET DE MESURE POUR CENTRALE PHOTOVOLTAÏQUE**

VERFAHREN UND SYSTEM ZUR EINSTELLUNG UND MESSUNG FÜR EIN PHOTOVOLTAIKKRAFTWERK

ADJUSTMENT AND MEASUREMENT METHOD AND SYSTEM FOR PHOTOVOLTAIC POWER PLANT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **29.11.2022  FR 2212518**

(43) Date de publication de la demande:
**05.06.2024  Bulletin 2024/23**

(73) Titulaire: **Commissariat à l'Energie Atomique et aux Energies Alternatives
75015 Paris (FR)**

(72) Inventeurs:
• **AMHAL, Mohamed
  38054 Grenoble Cedex 09 (FR)**
• **BUTTIN, Hervé
  38054 Grenoble Cedex 09 (FR)**

(74) Mandataire: **Atout PI Laplace
Immeuble Up On
25 Boulevard Romain Rolland
CS 40072
75685 Paris Cedex 14 (FR)**

(56) Documents cités:
**EP-A1- 3 349 317     CN-A- 114 553 138**

## Description

Domaine technique :

La présente invention concerne le domaine de la régulation et de mesure d'une centrale photovoltaïque et plus particulièrement de la mesure de courbes « courant en fonction de tension » nécessaires pour diagnostiquer les panneaux solaires de la centrale photovoltaïque.

Technique antérieure :

De manière connue, une centrale photovoltaïque comprend plusieurs panneaux branchés en série qui sont raccordés sur un onduleur. Un onduleur est un élément adapté pour transformer une tension continue générée par les panneaux photovoltaïques branchés en série en une tension alternative. Des systèmes photovoltaïques de grande taille peuvent être composés de plusieurs chaînes (plusieurs panneaux branchés en série) et de plusieurs onduleurs.

Une centrale photovoltaïque peut être sujet à plusieurs types de défauts, notamment des ombrages, de la salissure, du vieillissement, etc. Par exemple le vieillissement est généralement dû à une perte de courant de court-circuit liée à la décoloration et la délamination de l'encapsulant menant à une baisse moyenne de la puissance de 0,5 % par an (voir "Compendium of Photovoltaic Degradation Rates", D.C. Jordan, et al, NREL, 2015). Le document EP 3 349 317 A1 décrit des procédures qui sont relevantes pour l'invention.

Pour maximiser la production d'un système photovoltaïque pendant toute sa durée de vie (en général de 25 ans), l'exploitant a besoin de détecter les défauts et d'optimiser les actions de maintenance.

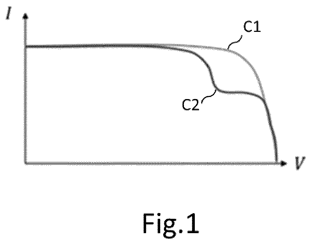

L'analyse de la courbe « courant produit en fonction de la tension » (ci-après « courbe IV ») est un moyen privilégié pour détecter les défauts et quantifier les pertes. Une courbe IV se déforme sous l'effet du défaut et la reconnaissance de la forme de la déformation permet d'identifier le type de défaut. La figure 1 est une représentation graphique de courbes IV d'un système photovoltaïque de l'art antérieur. La courbe IV C1 est typique d'un système photovoltaïque ne présentant aucun défaut alors que la courbe C2 est typique d'un système photovoltaïque présentant un défaut lié à la salissure du module.

Il est cependant couteux de mesurer la courbe IV d'un système photovoltaïque car cela nécessite un temps d'arrêt de production d'au moins d'une partie de la centrale et du matériel et sollicite de la main d'œuvre. En effet, une mesure IV dure généralement plusieurs secondes. Pendant ce temps, la puissance de la centrale photovoltaïque est réduite de façon partielle ou totale, pour permettre un réglage en tension nécessaire aux mesures. A chaque valeur de la tension, une mesure du courant produit est effectuée. Pour des besoins de stabilité, un temps minimum de maintien de la tension autour d'une valeur est nécessaire.

Les centrales photovoltaïques, comme tout autre moyen de production raccordé aux réseaux de distribution et de transmission d'électricité, doivent participer à l'effort du maintien de la stabilité du réseau en fréquence et en tension. Ceci implique de devoir réguler la puissance produite à la hausse (augmenter la puissance injectée) ou à la baisse (réduire la puissance injectée) des centrales photovoltaïques.

Faire varier la puissance d'une centrale photovoltaïque, consiste à faire varier la puissance de chaque onduleur/chaîne. Le document FR3060229 par exemple traite du sujet de participation au réglage de fréquence par les centrales photovoltaïques. Ce document porte spécifiquement sur le calcul de la puissance de référence pour estimer la puissance de réserve disponible à chaque instant.

Cependant, aucun des documents de l'art antérieur ne décrit une solution permettant de réaliser des services systèmes (réglage de fréquence et de tension), et de mesurer par la même occasion la courbe IV de chaque sous-système photovoltaïque (par exemple les différentes entrées des onduleurs).

L'invention vise à résoudre ce problème en mutualisant l'effort entre les différentes entrées en tension des différents onduleurs pour effectuer le réglage de la fréquence et de la tension délivrée par la centrale photovoltaïque tout en mesurant par la même occasion la courbe IV des entrées.

**Résumé de** l'invention :

A cet effet, un objet de l'invention est un procédé de réglage et de mesure pour centrale photovoltaïque comprenant au moins une chaine photovoltaïque, chaque chaine photovoltaïque comprenant des panneaux solaires branchés en série et comprenant un onduleur adapté pour transformer une tension continue générée par ladite chaine photovoltaïque en une tension alternative, chaque onduleur comprenant au moins une entrée en tension continue, ledit procédé comprenant les étapes suivantes :

A. Mesurer une fréquence f d'une tension alternative générée par ladite centrale photovoltaïque, calculer une variation de fréquence $\Delta f$ de ladite tension alternative par rapport à une fréquence de référence $f_{ref}$ prédéterminée telle que : $\Delta f = f - f_{ref}$ et calculer une variation de puissance $\Delta P$ à appliquer par la centrale photovoltaïque à partir de ladite variation de fréquence,

B. Si $\Delta P = 0$, répéter l'étape A, sinon : sélectionner une entrée en tension continue parmi les M > 1 entrées en tension continue, dite i-ième entrée avec i entier allant de 1 à M, afin de commencer ou reprendre une mesure de courbe « courant en fonction de tension » de la i-ième entrée, la i-ième entrée présentant une tension continue dite initale $V_{ini}$, puis mesurer une puissance $P_i$ générée par l'onduleur de la i-ième entrée, et créer un point de mesure d'abscisse x = $V_{ini}$ et d'ordonnée y = $P_i/V_{ini}$ à ladite courbe « courant en fonction de tension »,

C. Si une plage de pilotage de tension continue de la i-ième entrée, formée d'une tension continue dite maximale $V_{max}$ et une tension continue dite minimale $V_{min}$ de la i-ième entrée, est inconnue : déterminer, en appliquant une consigne en tension ou en puissance à la i-ième entrée selon ladite mesure de la puissance $P_i$, la tension maximale $V_{max}$ et la tension minimale $V_{min}$ de la i-ième entrée, C'. :

- appliquer une tension $V_n(p)$ à la i-ième entrée, avec p un entier compris entre 1 et $N > 1$ appelé point de mesure, ladite tension $V_n(p)$ étant différente des p - 1 tensions $V_n(q)$ pour q allant de 1 à p - 1 et étant comprise entre la tension maximale $V_{max}$ et la tension minimale $V_{min}$, puis,
- mesurer une puissance $P_i(p)$ générée par l'onduleur de la i-ième entrée et créer un p-ième point de mesure à ladite courbe « courant en fonction de tension » d'abscisse x = $V_n(p)$ et d'ordonnée y = $P_i(p)/V_n(p)$.

D. Calculer une variation de puissance dite résiduelle $\Delta P'$ à appliquer par ladite centrale photovoltaïque telle que $\Delta P' = \Delta P - (P_i(p) - P_i)$.

E. Si $\Delta P' \neq 0$ : annuler ladite variation de puissance résiduelle $\Delta P'$ en répartissant ladite variation sur des entrées différentes de la i-ième entrée,

F. Répéter les étapes C' à E une pluralité de fois en incrémentant p entre chaque itération, de manière à créer une pluralité de points de mesure différents de ladite courbe « courant en fonction de tension » mesurée.

Selon un mode de réalisation, lorsqu'un nombre de points de mesure créés de ladite courbe « courant en fonction de tension » de la i-ième entrée est égal à $N$ à l'issue de l'étape F, les étapes A à F sont répétées en incrémentant i de manière à commencer ou reprendre une mesure de courbe « courant en fonction de tension » d'une entrée différente de la i-ième entrée.

Selon un mode de réalisation, les étapes A à F sont répétées en incrémentant i de manière à commencer ou reprendre une mesure de courbe « courant en fonction de tension » des M entrées, jusqu'à l'obtention de N points de mesure pour chacune des M entrées.

Selon un mode de réalisation, lorsque qu'une nouvelle variation de fréquence $\Delta f'$ de ladite tension alternative générée par ladite centrale photovoltaïque par rapport à la fréquence de référence $f_{ref}$ mesuré dans l'étape F, est supérieure à un seuil prédéterminé $f_{lim}$, les étapes A à F sont répétées. De manière préférentielle, la valeur seuil de fréquence prédéterminée vaut 5 mHz.

Selon un mode de réalisation, les étapes A-E du procédé de l'invention sont mises en œuvre dans un intervalle de temps prédéterminé. De manière préférentielle, une durée dudit intervalle de temps prédéterminé est égale à 10s.

Selon un mode de réalisation, si $P_i \leq |\Delta P|$, l'étape C consiste à déterminer une tension de circuit ouvert $V_{oc}$ de la i-ième entrée, la tension maximale $V_{max}$ étant égale à la tension du circuit ouvert $V_{oc}$ de la i-ième, la tension minimale $V_{min}$ étant alors une tension prédéterminée de la i-ième entrée.

Selon un mode de réalisation, si $P_i > |\Delta P|$, l'étape C consiste à appliquer une consigne en puissance $P_i + \Delta P$ à la i-ième entrée en augmentant la tension jusqu'à à atteindre ladite tension maximale $V_{max}$, la tension minimale $V_{min}$ étant alors égale à $V_{ini}$.

Selon un mode de réalisation, la variation de puissance $\Delta P$ est calculée par l'équation suivante : $\Delta P = -k \times \Delta f$, avec k une constante positive paramétrable traduisant un niveau d'engagement annoncé par un exploitant de la centrale photovoltaïque.

Selon un mode de réalisation, l'étape E consiste en :

i. appliquer des consignes en puissance sur les entrées différentes de la i-ième entrée, de manière à modifier une puissance produite par ladite centrale d'une valeur égale à ladite variation de puissance résiduelle $\Delta P'$, ou

ii. répéter les étapes B à D, en incrémentant i, et avec $\Delta P = \Delta P'$ de manière à commencer ou reprendre une mesure de courbe « courant en fonction de tension » d'une entrée en tension différente de la i-ième entrée, ladite mesure de la i-ième entrée étant alors suspendue.

De manière préférentielle, dans l'étape E-i, une valeur $Pc_j$ de ladite consigne en puissance de chaque entrée j différente de i est proportionnelle à une puissance $P_j$ produite par ladite entrée $j$ de sorte que ladite valeur $Pc_j$ de ladite consigne en puissance de chaque entrée j soit égale à :

$$Pc_j = P_j + \frac{P_j}{\sum_{k \neq i} P_k} \times \Delta P'$$

Alternativement, dans l'étape E-ii, est effectuée une mise en parallèle des mesures de courbes « courant en fonction de tension » d'une pluralité d'entrées en incrémentant le point p de mesure simultanément pour toutes les entrées en cours de mesure de courbe « courant en fonction de tension ».

Selon un mode de réalisation, le procédé comprend une étape de correction de ladite courbe « courant en fonction de tension » à partir de mesures d'éclairement et/ou de mesures température effectuées au niveau de ladite au moins une chaine photovoltaïque pendant la mise en œuvre desdites étapes.

Selon un mode de réalisation, la tension initiale $V_{ini}$ de la i-ième entrée est une tension pour laquelle une puissance produite par la chaine photovoltaïque associée à la i-ième entrée est maximale.

Un autre objet de l'invention est un système de réglage et de mesure pour centrale photovoltaïque comprenant :

- au moins une chaine photovoltaïque, chaque chaine photovoltaïque comprenant des panneaux solaires branchés en série et comprenant un onduleur adapté pour transformer une tension continue générée par ladite chaine photovoltaïque en une tension alternative, chaque onduleur comprenant au moins une entrée en tension continue,
- des capteurs de tension adaptés pour mesurer une tension appliquée à chaque onduleur,
- un capteur de fréquence adapté pour mesurer une fréquence f d'une tension alternative générée par ladite centrale photovoltaïque,
- des capteurs de puissance adaptés pour mesurer une puissance générée par ladite centrale photovoltaïque et une puissance générée par chaque onduleur,
- un processeur adapté pour exécuter les étapes suivantes :

   A. Mesurer, via ledit capteur de fréquence, ladite fréquence f, calculer une variation de fréquence $\Delta f$ de ladite tension alternative par rapport à une fréquence de référence $f_{ref}$ prédéterminée telle que : $\Delta f = f - f_{ref}$ calculer une variation de puissance $\Delta P$ à appliquer par la centrale photovoltaïque à partir de ladite variation de fréquence,
   B. Si $\Delta P = 0$, répéter l'étape A, sinon : sélectionner une entrée en tension continue parmi les entrées en tension continue, dite i-ième entrée avec i entier i entier allant de 1 à M > 1 , afin de commencer ou reprendre une mesure de courbe « courant en fonction de tension » de la i-ième entrée, la i-ième entrée présentant une tension continue dite initale $V_{ini}$, puis mesurer une puissance $P_i$ généré par l'onduleur de la i-ième entrée, et créer un point de mesure d'abscisse x = $V_{ini}$ et d'ordonnée y = $P_i/V_{ini}$ à ladite courbe « courant en fonction de tension »,
   C. Si une plage de pilotage de tension continue de la i-ième entrée, formée d'une tension continue dite maximale $V_{max}$ et une tension continue dite minimale $V_{min}$ de la i-ième entrée, est inconnue :
   déterminer, en appliquant une consigne en tension ou en puissance à la i-ième entrée selon ladite mesure de la puissance $P_i$, la tension maximale $V_{max}$ et la tension minimale $V_{min}$ de la i-ième entrée,

C'. :

- appliquer une tension $V_n(p)$ à la i-ième entrée, avec p un entier compris entre 1 et N > 1 nommé point de mesure, ladite tension $V_n$ (p) étant différente des p - 1 tensions $V_n(q)$ pour q allant de 1 à p - 1 et étant comprise entre la tension maximale $V_{max}$ et la tension minimale $V_{min}$, puis mesurer une puissance $P_i(p)$ générée par l'onduleur la i-ième entrée, et créer un p-ième point de mesure à ladite courbe « courant en fonction de tension » d'abscisse x = $V_n(p)$ et d'ordonnée y = $P_i(p)/V_n(p)$,

   D. Calculer une variation de puissance dite résiduelle $\Delta P'$ à appliquer par ladite centrale photovoltaïque telle que $\Delta P' = \Delta P - (P_i(p) - P_i)$,
   E. Si $\Delta P' \neq 0$ : annuler ladite variation de puissance résiduelle $\Delta P'$ en répartissant ladite variation sur des entrées différentes de la i-ième entrée,
   F. Répéter les étapes C' à E une pluralité de fois en incrémentant p entre chaque itération, de manière à créer une pluralité de points de mesure de ladite courbe « courant en fonction de tension » mesurée.

De manière préférentielle, le système comprend en outre un capteur de température adapté pour mesurer une température au niveau de ladite au moins une chaine photovoltaïque et/ou comprenant un capteur d'éclairement adapté pour mesurer un éclairement au niveau de ladite au moins une chaine photovoltaïque, ledit processeur étant en outre adapté pour corriger ladite courbe « courant en fonction de tension » à partir de mesures d'éclairement et/ou de mesures température effectuées pendant la mise en œuvre desdites étapes.

**Brève description des** figures :

D'autres caractéristiques, détails et avantages de l'invention ressortiront à la lecture de la description faite en référence aux dessins annexés donnés à titre d'exemple et qui représentent, respectivement :

   [Fig.1], une représentation graphique de courbes IV d'un système photovoltaïque de l'art antérieur,

   [Fig.2A], une représentation schématique d'un procédé de réglage et de mesure pour centrale photovoltaïque selon l'invention,

   [Fig.2B], une représentation schématique d'un système de réglage et de mesure pour centrale photovoltaïque selon l'invention particulièrement adapté pour mettre en œuvre le procédé de la figure 2A,

[Fig.3], une représentation schématique d'un mode de réalisation préféré du procédé de l'invention,

[Fig.4], une représentation graphique de la courbe IV d'une entrée dans le cas où $P_i \le |\Delta P|$,

[Fig.5], une représentation graphique de la courbe IV et la courbe puissance en fonction de tension d'une entrée dans le cas où $P_i > |\Delta P|$,

[Fig.6], une représentation schématique d'un mode de réalisation préféré du système de l'invention comprenant en outre un capteur de température Temp et un capteur d'éclairement PD.

Dans les figures, sauf contre-indication, les éléments ne sont pas à l'échelle.

**Description** détaillée :

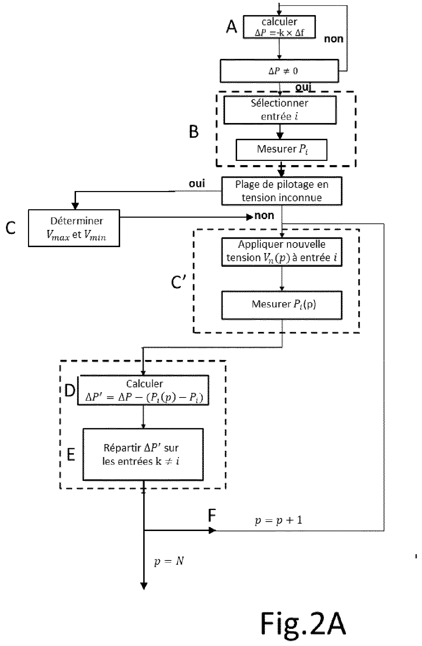

La figure 2A illustre schématiquement le déroulement d'un procédé selon l'invention de réglage et de mesure pour centrale photovoltaïque.

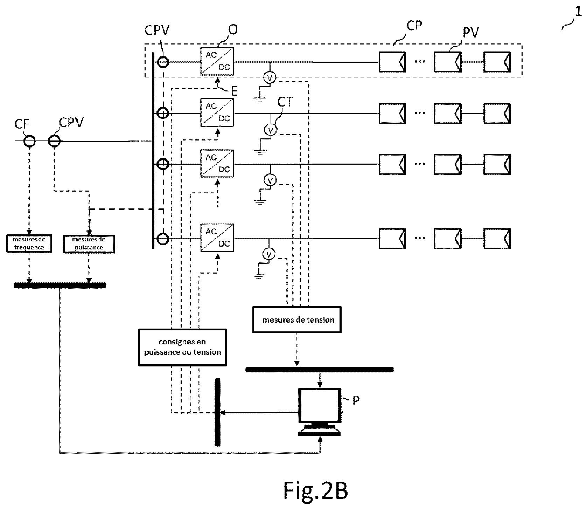

La figure 2B est une représentation schématique d'un système 1 selon l'invention de réglage et de mesure pour centrale photovoltaïque et particulièrement adapté pour mettre en œuvre le procédé de la figure 2A.

Le système 1 de l'invention comprend au moins une chaine photovoltaïque CP. Chaque chaine photovoltaïque CP comprend des panneaux solaires PV branchés en série et un onduleur O respectif.

A titre d'exemple non limitatif, le système de la figure 2B comprend quatre chaines photovoltaïques CP. Selon un mode de réalisation différent de celui illustré, le système 1 comprend un grand nombre de chaînes CP, typiquement supérieur ou égal à 10.

Pour rappel, un onduleur O est adapté pour transformer une tension continue générée par une chaine photovoltaïque en une tension alternative. Chaque onduleur O accepte la consignation de sa tension continue ou de sa puissance alternative via une ou plusieurs entrées de commande E. Dans le système 1, les consignes sont émises par un processeur P sous le contrôle de l'exploitant de la centrale photovoltaïque. A titre d'exemple non limitatif, dans le système de la figure 2B, chaque onduleur O comprend une entrée de commande E, visant à piloter l'entrée en tension continue de l'onduleur. Pour simplifier l'exposé de l'invention, on considère à présent que le nombre total d'entrées de commande vaut M > 1 et on numérote ces entrées de 1 à M. De manière similaire, on considère que les entrées en tension continue issues des chaines photovoltaïques CP sont également au nombre de M > 1 et l'on numérote ces entrées de 1 à M.

Le système 1 de l'invention comprend en outre des capteurs de tension CT adaptés pour mesurer une tension appliquée à chaque onduleur O et des capteurs de courant (non représentés en figure 1) adaptés pour mesurer un courant appliqué à chaque onduleur O. De plus le système 1 comprend un capteur de fréquence CF adapté pour mesurer la fréquence f de la tension alternative générée par la centrale photovoltaïque. Cette fréquence f est typiquement la fréquence du réseau au point d'injection.

De plus, le système 1 comprend des capteurs de puissance CPV adaptés pour mesurer une puissance générée par chaque onduleur et par la centrale.

Le processeur P du système 1 est adapté pour exécuter une pluralité d'étapes permettant le réglage de la fréquence et de la tension délivrée par la centrale photovoltaïque tout en mesurant par la même occasion la courbe IV d'une ou plusieurs entrées, sans nécessiter un temps d'arrêt de la production électrique. Ainsi, la disponibilité de la centrale photovoltaïque se trouve améliorée par le procédé et le système de l'invention.

Les étapes mises en œuvre par le processeur P correspondent à celles du procédé de l'invention, dont les étapes sont représentées en figure 2A.

Dans une première étape A est effectuée une mesure de la fréquence f via le capteur de fréquence CF. De plus, l'étape A comprend le calcul d'une variation de fréquence de la tension alternative par rapport à une fréquence de référence $f_{ref}$ prédéterminée : $\Delta f = f - f_{ref}$. La fréquence de référence est une fréquence fixée par l'exploitant de la centrale photovoltaïque ou le gestionnaire du réseau électrique utilisant la centrale photovoltaïque. Cette fréquence de référence est la fréquence du réseau inter-connecté et utilisée par le gestionnaire. Elle vaut par exemple $f_{ref} = 50$ Hz en Europe. Le procédé de l'invention est mis en œuvre uniquement lorsque le système fournit un service à la baisse, c'est-à-dire lorsque la mesure de l'étape A a permis d'identifier que $f > f_{ref}$ (et donc $\Delta f > 0$). Il est entendu que le système 1 de l'invention peut être adapté pour fournir aussi bien un service à la baisse $(f > f_{ref})$ et à la hausse $(f < f_{ref})$. Enfin, l'étape A comprend le calcul d'une variation de puissance $\Delta P$ à appliquer par la centrale photovoltaïque afin de contribuer à la régulation de la variation de fréquence $\Delta f$. C'est-à-dire qu'on cherche à modifier la fréquence $f$ de la valeur $\Delta f$ en faisant varier la puissance P produite par la centrale et injectée dans le réseau. Dans la pratique, de nombreux moyens de production devront contribuer conjointement et seulement leur cumul permettra de réguler la variation de fréquence $\Delta f$ vers 0, et donc obtenir *in fine* une variation de puissance $\Delta P$ égale à 0.

Préférentiellement, comme illustré en figure 2A, la variation de puissance $\Delta P$ est calculée de la manière suivante : $\Delta P = -k \times \Delta f$, avec k une constante positive paramétrable traduisant un niveau d'engagement annoncé par un exploitant de la centrale photovoltaïque auprès du gestionnaire du réseau électrique. Comme expliqué précédemment, le procédé de l'invention est mis en œuvre lorsque le système fournit un service à la baisse, c'est-à-dire qu'on a

$$\Delta P < 0.$$

Si $\Delta P = 0$ alors le processeur P répète l'étape A jusqu'à mesurer une variation de puissance $\Delta P$ non nulle.

Si $\Delta P \neq 0$, cela signifie que l'on doit appliquer une variation de la puissance de la centrale pour contribuer à réguler la fréquence. Aussi, dans une étape B, le processeur P est adapté pour sélectionner une entrée en tension continue parmi les M entrées en tension continue, dite i-ième entrée, avec i entier allant de 1 à M, afin de commencer ou reprendre une mesure de courbe IV de la i-ième entrée. On considère que la i-ième entrée présente une tension continue dite initale $V_{ini}$ à ses bornes. Cette tension $V_{ini}$ est par défaut (mais pas nécessairement) une tension régulée par une fonction MPPT (pour *Maximum Power Point Tracker* en anglais) qui permet de réguler la tension aux bornes de la chaîne photovoltaïque afin de maximiser la puissance produite. En outre, dans l'étape B, le processeur est adapté pour mesurer, avec un des capteurs de puissance CPV, la puissance $P_i$ produite par l'onduleur de la i-ième entrée en tension continue . De plus, le processeur créé un point de mesure d'abscisse $x = V_{ini}$ et d'ordonnée $y = P_i/V_{ini}$ de la courbe IV de la i-ième entrée.

Après l'étape B, le processeur met en œuvre une étape C ou une étape C' selon si la plage de pilotage de tension continue de la i-ième entrée est connue par le processeur P. Cette plage de pilotage est caractérisée par une tension continue dite maximale $V_{max}$ et une tension continue dite minimale $V_{min}$ de la i-ième entrée. En effet, afin d'effectuer une caractérisation la plus complète des défauts et de mieux quantifier les pertes, il est préférable de tracer la courbe IV d'une entrée sur une plage de tension la plus grande possible et il est donc nécessaire de déterminer $V_{max}$ et $V_{min}$.

Dans le cas où la plage de pilotage est inconnue, le processeur met en œuvre l'étape C qui consiste à déterminer la tension maximale $V_{max}$ et la tension minimale $V_{min}$ de la plage de pilotage de la i-ième entrée, en appliquant une consigne en tension ou en puissance à la i-ième entrée en fonction de la mesure de la puissance $P_i$. La consigne est émise par le processeur P. A la suite de cette étape C, le processeur mettra en œuvre l'étape C', car les bornes de la plage de pilotage de la i-ième entrée seront dorénavant connues.

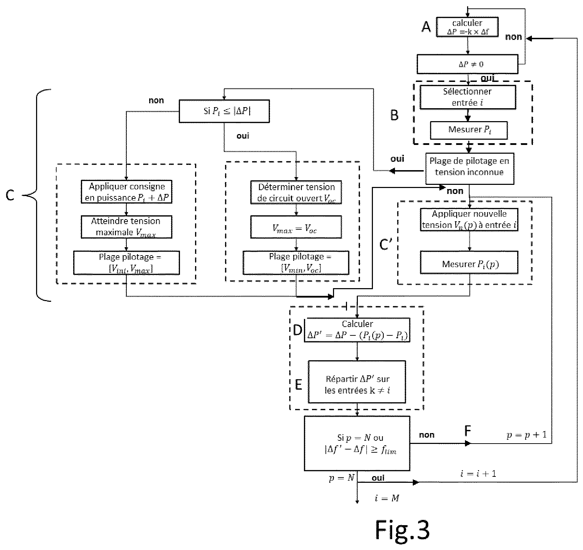

La figure 3 détaillée plus loin donne un exemple de mise en œuvre préférée de l'étape C.

Dans le cas où la plage de pilotage de la i-ième entrée est connue (par exemple après l'étape C), le processeur met en œuvre l'étape C' qui consiste à appliquer une consigne en tension de valeur $V_n(p)$ à la i-ième entrée, avec p un entier allant de 1 à $N > 1$ nommé point de mesure. Afin de relever des points de mesure différents de la courbe IV, chaque tension $V_n(p)$ est différente des p - 1 tensions $V_n(q)$ pour q allant de 1 à p - 1 et est comprise entre la tension maximale $V_{max}$ et la tension minimale $V_{min}$ (qui sont toutes les deux connues en étapes C'). Enfin, le processeur mesure la puissance

$P_i(p)$ générée par la i-ième entrée pour ce nouveau p, et créé un p-ième point de mesure à ladite courbe « courant en fonction de tension » d'abscisse $x = V_n(p)$ et d'ordonnée $y = P_i(p)/V_n(p)$.

A la suite de modification de la tension ou de la puissance via la consigne émise par le processeur P, on calcule dans une étape D une variation de puissance dite résiduelle $\Delta P'$ à appliquer par la centrale photovoltaïque pour effectuer la régulation. La variation de puissance résiduelle vaut $\Delta P' = \Delta P - (P_i(p) - P_i)$.

Si $\Delta P' \neq 0$ alors, dans une étape E, le processeur P annule la variation de puissance résiduelle $\Delta P'$ en la répartissant sur des entrées différentes de la i-ième entrée. Cette étape E peut être mise en œuvre de plusieurs manières.

Selon un premier mode de réalisation, l'étape E consiste à appliquer des consignes en puissance sur des entrées différentes de la i-ième entrée, de manière à modifier une puissance produite par la centrale d'une valeur cumulée égale à la variation de puissance résiduelle $\Delta P'$. Pour cela, préférentiellement, une valeur $Pc_j$ de la consigne en puissance de chaque entrée $j$ différente de i est proportionnelle à une puissance $P_j$ produite par ladite entrée j. Plus précisément, pour répartir la variation de puissance résiduelle $\Delta P'$, la valeur $Pc_j$ de la consigne en puissance de chaque entrée $j$ différente de la i-ième entrée vaut

$$Pc_j = P_j + \frac{P_j}{\sum_{k \neq i} P_k} \times \Delta P'.$$

Ce premier mode de réalisation permet d'ajouter du foisonnement et ainsi de réduire l'impact sur la production globale d'une forte variation locale de puissance du/des onduleurs permettant de répondre au service de réduction de puissance.

Alternativement, selon un deuxième mode de réalisation, l'étape E consiste à répéter les étapes B à D, en incrémentant i, et avec $\Delta P = \Delta P'$ de manière à commencer ou reprendre une mesure de courbe IV d'une entrée i + 1 différente de la i-ième entrée. Dans ce cas, la mesure de la courbe IV de la i-ième entrée est suspendue, par exemple jusqu'à ce que celle de l'entrée i + 1 soit terminée. Le deuxième mode de réalisation est particulièrement intéressant lorsque le système comprend des onduleurs delivrant des puissances différentes. En effet, le deuxième mode de réalisation permet alors de privilégier un onduleur plutôt qu'un autre afin de remplir la condition $P_i \leq \Delta P$ et ainsi permettre de déterminer la tension de circuit ouvert Voc de l'entrée correspondante.

Selon une variante du deuxième mode de réalisation, dans l'étape E est effectuée une mise en parallèle des mesures de courbes IV d'une pluralité d'entrées en incrémentant le point p de mesure simultanément pour toutes les entrées en cours de mesure. Cette variante permet de d'effectuer ainsi les caractérisations IV de plusieurs sous-systèmes simultanément. De plus cette variante permet de tracer la courbe IV de différentes entrées dans des conditions d'éclairement et de températures proches et donc de ne pas ajouter de biais dans l'inter-comparaison des caractéristiques I/V.

A la suite de l'étape E, la puissance résiduelle est donc répartie entre les différentes entrées de manière à être annulée et la contribution de la centrale à la régulation de fréquence est effective.

Si $\Delta P' = 0$ alors cette étape E est inutile est on passe directement à l'étape F.

Enfin, afin de tracer une courbe IV de la i-ième entrée exploitable il est nécessaire de mesurer une pluralité de points. Pour cela, le processeur P est adapté pour metre en œuvre une dernière étape F. L'étape F consiste à répéter les étapes C' à E une pluralité de fois en incrémentant p entre chaque itération, de manière à créer une pluralité de points de mesure de la courbe IV mesurée par exemple jusqu'à obtenir N points de mesure. Plus précisément, le processeur applique de nouvelles consignes en tension de valeurs différentes de celles des précédentes consignes en tension, la valeur de chaque consigne étant comprise entre $V_{min}$ et $V_{max}$.

Ainsi, à l'issue du procédé, le système 1 a permis une contribution à la régulation en fréquence de la centrale photovoltaïque tout en obtenant la courbe IV d'au moins une entrée et cela sans nécessiter un temps d'arrêt de la production électrique. Pour se faire, la tension de pilotage de la ou les entrées est calculée afin de pouvoir balayer toute la plage de tension possible et relever la courbe IV associée à cette entrée. Une mutualisation entre les différentes entrées permet d'assurer la réponse aux services systèmes d'une manière globale. Le procédé de l'invention permet donc une augmentation de la disponibilité de la centrale photovoltaïque et une réduction du coût associé à la caractérisation des défauts.

De manière connue en soit, la ou les courbe IV obtenues serviront par la suite pour détecter les défauts du système photovoltaïque.

Préférentiellement, les étapes A à E du procédé de l'invention pour contribuer à la régulation de fréquence sont toutes mises en œuvre dans un intervalle de temps prédéterminé. Cet intervalle de temps correspond au temps maximal de mise en œuvre d'une consigne de puissance accordée par le contractant du service. De manière encore préférentielle, l'intervalle de temps prédéterminé a une durée égale à 10s.

La figure 3 illustre schématiquement un mode de réalisation préféré du procédé de l'invention comprenant un exemple de mise en œuvre de l'étape C.

Dans ce mode de réalisation, l'étape C consistant à déterminer $V_{max}$ et $V_{min}$ de la plage de pilotage de la i-ième entrée via une consigne en tension ou en puissance est effectuée de deux manière différentes selon la mesure de la puissance $P_i$.

Tout d'abord, si $P_i \leq |\Delta P|$ alors l'annulation de la puissance de la i-ième entrée est insuffisante pour appliquer la variation de la puissance $\Delta P$. Dans ce cas, l'étape C est effectuée via une consignation en tension de la i-ième entrée. Plus précisément, l'étape C consiste à consigner la i-ième entrée à sa tension maximale de spécification $V_{max,s}$. Cette tension étant supérieure à la tension du circuit ouvert $V_{oc}$, la consignation à la tension $V_{max,s}$ permet la mesure de la tension $V_{oc}$, qui correspond alors à la tension $V_{max}$ de la plage de pilotage de la i-ième entrée. On obtient donc un point de mesure de la courbe IV d'abscisse $x = V_{oc}$ et d'ordonnée $y = I(V_{oc}) = 0$. Dans ce cas de figure, la tension minimale $V_{min}$ de la plage de pilotage est égale à la tension minimale de spécification de la i-ième entrée, qui est une tension prédéterminée.

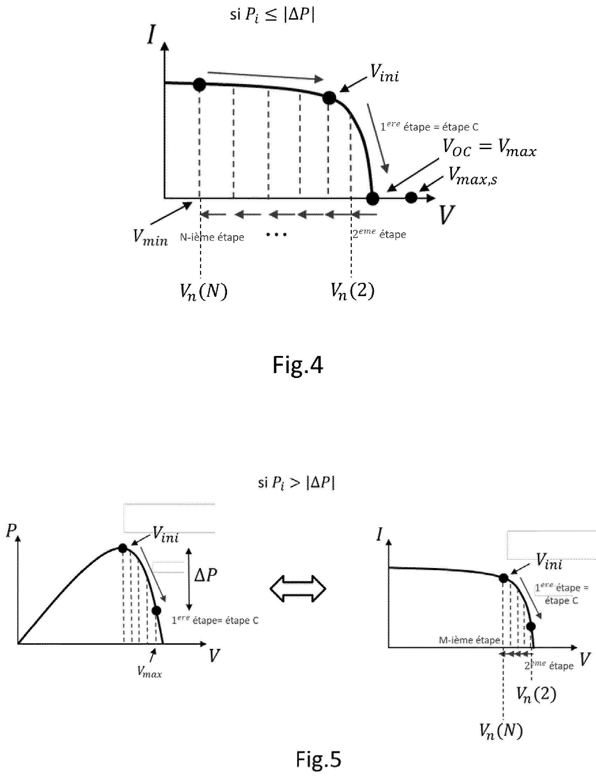

La figure 4 est une représentation graphique de la courbe IV d'une entrée dans le cas où $P_i \leq |\Delta P|$, sur laquelle sont détaillées différentes étapes nécessaires à l'obtention de la courbe IV. Sur la figure 4 est représentée l'étape C consistant déterminer la tension de circuit ouvert $V_{oc}$ qui est la première étape du tracé de la courbe IV après l'obtention du point initial d'abscisse $x = V_{ini}$. Dans la figure 4, à titre d'exemple illustratif, on a représenté différentes valeurs $V_n(p)$ (de p = 2 à p = N) de consignes en tension de valeur $V_n(p)$ de la i-ième entrée qui sont utilisées pour tracer la courbe IV.

Alternativement, dans le cas où $P_i > |\Delta P|$, l'étape C est effectuée via une consignation en puissance de la i-ième entrée. Préférentiellement, l'étape C consiste à consigner la i-ième entrée à la puissance $P_i + \Delta P$ en augmentant la tension jusqu'à atteindre une tension maximale pour laquelle la puissance produite a variée de $\Delta P$. Cette tension maximale correspond à la tension $V_{max}$ de la plage de pilotage de la i-ième entrée. Ainsi, on obtient donc un point de mesure de la courbe IV d'abscisse $x = V_{max}$ et d'ordonnée $y = (P_i + \Delta P)/ V_{max}$.

Dans ce cas de figure, la tension minimale $V_{min}$ de la plage de pilotage est égale à la tension initale $V_{ini}$ de la i-ième entrée. Cette tension $V_{ini}$ est préférentiellement une tension régulée par une fonction MPPT, c'est à dire la tension permettant de maximiser la puissance produite par la chaine photovoltaïque associée à l'entrée caractérisée.

La figure 5 est une représentation de la courbe IV (à droite) et de la courbe puissance en fonction de tension (à gauche) d'une entrée dans le cas où $P_i > |\Delta P|$, sur laquelle sont détaillées différentes étapes nécessaires à l'obtention de ces courbes. Sur la figure 5 est représentée l'étape C consistant atteindre la tension maximale $V_{max}$ via la consignation de la i-ième entrée à la puissance $P_i + \Delta P$, qui est la première étape du tracé de la courbe IV (après l'obtention du point initial d'abscisse $x = V_{ini}$). Dans la figure 5, à titre d'exemple illustratif, la tension $V_{ini}$ correspond à un maximum de la puissance produite. De plus, la figure 5 illustre différentes valeurs $V_n(p)$ (de $p = 2$ à $p = N)$ de consignes en tension de valeur $V_n(p)$ de la i-ième entrée qui sont utilisées pour tracer la courbe IV.

Dans le mode de réalisation de la figure 3, le procédé comprend une étape additionnelle, qui consiste à répéter les étapes A à F en incrémentant i de manière à commencer ou reprendre une mesure de courbe IV d'une entrée différente de la i-ième entrée lorsqu'un nombre de points de mesure créé de la courbe IV de la i-ième entrée est égal à un nombre N prédéterminé à l'issue de l'étape F. Autrement dit, cette étape additionnelle consiste à :

- stopper l'étape F lorsque la courbe IV de la i-ième entrée comprend N points de mesure, puis

- répéter le procédé de l'invention pour une autre entrée (en incrémentant i) afin d'obtenir sa courbe IV ou, le cas échéant, de reprendre la mesure de sa courbe IV si la mesure a été interrompue en étape E.

Cette étape additionnelle permet une caractérisation plus complète de la centrale photovoltaïque. Préférentiellement, cette étape additionnelle est répétée un nombre de fois suffisant pour obtenir la courbe IV de chacune des M entrées afin de réaliser une caractérisation complète des défauts de la centrale photovoltaïque.

Lors de la mise en œuvre de l'étape F, il est préférable de s'assurer que les données de départ ne varient pas trop fortement par rapport au moment où a été mise en œuvre l'étape A. Aussi, préférentiellement comme illustré dans le procédé de la figure 3, lors de l'exécution de l'étape F on effectue des mesures de la fréquence delivrée afin de s'assurer qu'elle reste suffisament stable, et si une déviation trop importante de la fréquence est observée alors on relance le procédé depuis sa première étape. C'est-à-dire que, lorsque qu'une nouvelle variation de fréquence $\Delta f'$ de la tension alternative générée par rapport à une fréquence de référence $f_{ref}$ est mesurée en étape F et est supérieure à un seuil prédéterminée $f_{lim}$ (c'est-à-dire lorsque $|\Delta f' - \Delta f| \geq f_{lim}$, les étapes A à F sont répétées. Préférentiellement, la valeur de seuil de fréquence prédéterminée vaut 5 mHz car cela correspond à la valeur intermédiaire entre la résolution demandée de la mesure de +/- 1mHz et l'incertitude maximale sur cette mesure de +/-10mHz, selon le service primaire de fréquence français actuel. On appelle « incertitude maximale » la valeur maximale admissible de l'erreur de mesure de la fréquence. On appelle « résolution de la mesure » la différence entre la valeur donnée par la mesure et la valeur exacte de la grandeur physique.

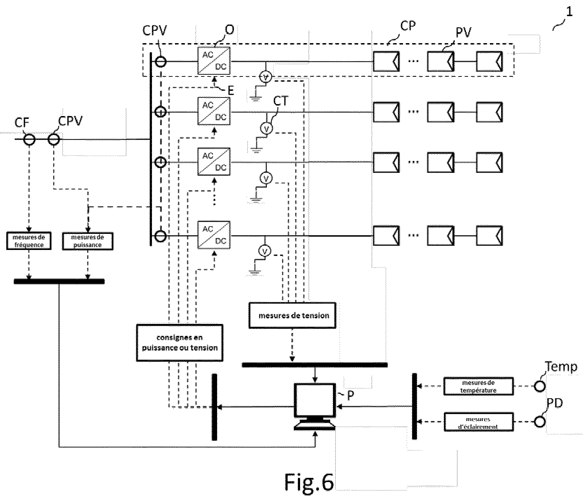

De manière connue en soit, des variations de températures et d'éclairement au niveau des chaines photovoltaïques vont entrainer des variations sur la mesure de la courbe IV qui ne seront pas dues à des défauts des panneaux solaires. Ces variations sont donc susceptibles de fausser la caractérisation des défauts des panneaux solaires. Afin d'éviter ces erreurs, la figure 6 illustre un mode de réalisation préféré dans lequel le système de l'invention comprend en outre un capteur de température Temp et un capteur d'éclairement PD adaptés pour mesurer respectivement la température et l'éclairement au niveau des chaines photovoltaïques. En outre, le processeur P est adapté pour corriger la courbe « courant en fonction de tension » à partir de mesures d'éclairement et de mesures température effectuées pendant. La caractérisation de défaut est donc plus fiable dans le mode de réalisation de la figure 6. Selon un mode de réalisation différent de celui illustré en figure 6, le système 1 comprend un capteur de température Temp ou un capteur d'éclairement PD.

A titre d'exemple non limitatif, le capteur d'éclairement PD est une photodiode.

## Revendications

1. Procédé de réglage et de mesure pour centrale photovoltaïque comprenant au moins une chaine photovoltaïque (CP), chaque chaine photovoltaïque (CP) comprenant des panneaux solaires (PV) branchés en série et comprenant un onduleur (O) adapté pour transformer une tension continue générée par ladite chaine photovoltaïque en une tension alternative, chaque onduleur comprenant au moins une entrée en tension continue, ledit procédé comprenant les étapes suivantes :

   A. Mesurer une fréquence f d'une tension alternative générée par ladite centrale photovoltaïque, calculer une variation de fréquence $\Delta f$ de ladite tension alternative par rapport à une fréquence de référence $f_{ref}$ prédéterminée telle que : $\Delta f = f - f_{ref}$ et calculer une variation de puissance $\Delta P$ à appliquer par la centrale photovoltaïque à partir de ladite variation de fréquence,

   B. Si $\Delta P = 0$, répéter l'étape A, sinon : sélectionner une entrée en tension continue parmi les M > 1 entrées en tension continue, dite i-ième entrée avec i entier allant de 1 à M, afin de commencer ou reprendre une mesure de courbe « courant en fonction de tension » de la i-ième entrée, la i-ième entrée présentant une tension continue dite initale $V_{ini}$, puis mesurer une puissance $P_i$ générée par l'onduleur de la i-ième entrée, et créer un point de mesure d'abscisse x = $V_{ini}$ et d'ordonnée y = $P_i/V_{ini}$ à ladite courbe « courant en fonction de tension »,

   C. Si une plage de pilotage de tension continue de la i-ième entrée, formée d'une tension continue dite maximale $V_{max}$ et une tension continue dite minimale $V_{min}$ de la i-ième entrée, est inconnue : déterminer, en appliquant une consigne en tension ou en puissance à la i-ième entrée selon ladite mesure de la puissance $P_i$, la tension maximale $V_{max}$ et la tension minimale $V_{min}$ de la i-ième entrée,

   C'. :

      - appliquer une tension $V_n(p)$ à la i-ième entrée, avec p un entier compris entre 1 et $N > 1$ appelé point de mesure, ladite tension $V_n(p)$ étant différente des $p - 1$ tensions $V_n(q)$ pour $q$ allant de 1 à $p - 1$ et étant comprise entre la tension maximale $V_{max}$ et la tension minimale $V_{min}$, puis
- mesurer une puissance $P_i(p)$ générée par l'onduleur de la i-ième entrée et créer un p-ième point de mesure à ladite courbe « courant en fonction de tension » d'abscisse x = $V_n(p)$ et d'ordonnée y = $P_i(p)/V_n(p)$.

D. Calculer une variation de puissance dite résiduelle $\Delta P'$ à appliquer par ladite centrale photovoltaïque telle que $\Delta P' = \Delta P - (P_i(p) - P_i)$,
E. Si $\Delta P' \neq 0$ : annuler ladite variation de puissance résiduelle $\Delta P'$ en répartissant ladite variation sur des entrées différentes de la i-ième entrée,
F. Répéter les étapes C' à E une pluralité de fois en incrémentant p entre chaque itération, de manière à créer une pluralité de points de mesure différents de ladite courbe « courant en fonction de tension » mesurée.

2. Procédé selon la revendication 1, dans lequel, lorsqu'un nombre de points de mesure créés de ladite courbe « courant en fonction de tension » de la i-ième entrée est égal à $N$ à l'issue de l'étape F, les étapes A à F sont répétées en incrémentant i de manière à commencer ou reprendre une mesure de courbe « courant en fonction de tension » d'une entrée différente de la i-ième entrée.

3. Procédé selon l'une quelconque des revendications 1 à 2, dans lequel les étapes A à F sont répétées en incrémentant i de manière à commencer ou reprendre une mesure de courbe « courant en fonction de tension » des M entrées, jusqu'à l'obtention de N points de mesure pour chacune des M entrées.

4. Procédé selon l'une quelconque des revendications 1 à 3, dans lequel, lorsque qu'une nouvelle variation de fréquence $\Delta f'$ de ladite tension alternative générée par ladite centrale photovoltaïque par rapport à la fréquence de référence $f_{ref}$, mesuré dans l'étape F, est supérieure à un seuil prédéterminé $f_{lim}$, les étapes A à F sont répétées .

5. Procédé selon la revendication précédente, dans lequel ladite valeur seuil de fréquence prédéterminée vaut 5 mHz.

6. Procédé selon l'une quelconque des revendications précédentes, dans lequel les étapes A-E du procédé de l'invention sont mises en œuvre dans un intervalle de temps prédéterminé.

7. Procédé selon la revendication précédente, dans lequel une durée dudit intervalle de temps prédéterminé est égale à 10s.

8. Procédé selon l'une quelconque des revendications précédentes, dans lequel, si $P_i \leq |\Delta P|$, l'étape C consiste à déterminer une tension de circuit ouvert $V_{oc}$ de la i-ième entrée, la tension maximale $V_{max}$ étant égale à la tension du circuit ouvert $V_{oc}$ de la i-ième, la tension minimale $V_{min}$ étant alors une tension prédéterminée de la i-ième entrée.

9. Procédé selon l'une quelconque des revendications précédentes, dans lequel, si $P_i > |\Delta P|$, l'étape C consiste à appliquer une consigne en puissance $P_i$ + $\Delta P$ à la i-ième entrée en augmentant la tension jusqu'à à atteindre ladite tension maximale $V_{max}$, la tension minimale $V_{min}$ étant alors égale à $V_{ini}$.

10. Procédé selon l'une quelconque des revendications précédentes, dans lequel ladite variation de puissance $\Delta P$ est calculée par l'équation suivante : $\Delta P = -k \times \Delta f$, avec k une constante positive paramétrable traduisant un niveau d'engagement annoncé par un exploitant de la centrale photovoltaïque.

11. Procédé selon l'une quelconque des revendications précédentes, dans lequel l'étape E consiste en :

i. appliquer des consignes en puissance sur les entrées différentes de la i-ième entrée, de manière à modifier une puissance produite par ladite centrale d'une valeur égale à ladite variation de puissance résiduelle $\Delta P'$, ou
ii. répéter les étapes B à D, en incrémentant i, et avec $\Delta P = \Delta P'$ de manière à commencer ou reprendre une mesure de courbe « courant en fonction de tension » d'une entrée en tension différente de la i-ième entrée, ladite mesure de la i-ième entrée étant alors suspendue.

12. Procédé selon la revendication précédente, dans lequel, dans l'étape E-i, une valeur $Pc_j$ de ladite consigne en puissance de chaque entrée $j$ différente de i est proportionnelle à une puissance $P_j$ produite par ladite entrée j de sorte que ladite valeur $Pc_j$ de ladite consigne en puissance de chaque entrée $j$ soit égale à :

$$Pc_j = P_j + \frac{P_j}{\sum_{k \neq i} P_k} \times \Delta P'$$

13. Procédé selon la revendication 11 dans lequel, dans l'étape E-ii, est effectuée une mise en parallèle des mesures de courbes « courant en fonction de tension » d'une pluralité d'entrées en incrémentant le point p de mesure simultanément pour toutes les entrées en cours de mesure de courbe « courant en fonction de tension ».

**14.** Procédé selon l'une quelconque des revendications précédentes, comprenant une étape de correction de ladite courbe « courant en fonction de tension » à partir de mesures d'éclairement et/ou de mesures température effectuées au niveau de ladite au moins une chaine photovoltaïque pendant la mise en œuvre desdites étapes.

**15.** Procédé selon l'une quelconque des revendications précédentes, dans lequel la tension initale $V_{ini}$ de la i-ième entrée est une tension pour laquelle une puissance produite par la chaine photovoltaïque associée à la i-ième entrée est maximale.

**16.** Système (1) de réglage et de mesure pour centrale photovoltaïque comprenant :

- au moins une chaine photovoltaïque (CV), chaque chaine photovoltaïque comprenant des panneaux solaires (PV) branchés en série et comprenant un onduleur (O) adapté pour transformer une tension continue générée par ladite chaine photovoltaïque en une tension alternative, chaque onduleur comprenant au moins une entrée en tension continue,
- des capteurs de tension (CT) adaptés pour mesurer une tension appliquée à chaque onduleur
- un capteur de fréquence (CF) adapté pour mesurer une fréquence f d'une tension alternative générée par ladite centrale photovoltaïque,
- des capteurs de puissance (CPV) adaptés pour mesurer une puissance générée par ladite centrale photovoltaïque et une puissance générée par chaque onduleur,
- un processeur (P) adapté pour exécuter les étapes suivantes :

A. mesurer, via ledit capteur de fréquence, ladite fréquence f, calculer une variation de fréquence $\Delta f$ de ladite tension alternative par rapport à une fréquence de référence $f_{ref}$ prédéterminée telle que : $\Delta f = f - f_{ref}$ calculer une variation de puissance $\Delta P$ à appliquer par la centrale photovoltaïque à partir de ladite variation de fréquence,
B. Si $\Delta P = 0$, répéter l'étape A, sinon : sélectionner une entrée en tension continue parmi les entrées en tension continue, dite i-ième entrée avec i entier i entier allant de 1 à $M > 1$ , afin de commencer ou reprendre une mesure de courbe « courant en fonction de tension » de la i-ième entrée, la i-ième entrée présentant une tension continue dite initale $V_{ini}$, puis mesurer une puissance $P_i$ générée par l'onduleur de la i-ième entrée, et créer un point de mesure d'abscisse x = $V_{ini}$ et d'ordonnée y = $P_i/V_{ini}$ à ladite courbe « courant en fonction de tension »,
C. Si une plage de pilotage de tension continue de la i-ième entrée, formée d'une tension continue dite maximale $V_{max}$ et une tension continue dite minimale $V_{min}$ de la i-ième entrée, est inconnue : déterminer, en appliquant une consigne en tension ou en puissance à la i-ième entrée selon ladite mesure de la puissance $P_i$, la tension maximale $V_{max}$ et la tension minimale $V_{min}$ de la i-ième entrée,
C'. :

- appliquer une tension $V_n(p)$ à la i-ième entrée, avec p un entier compris entre 1 et $N > 1$ nommé point de mesure, ladite tension $V_n(p)$ étant différente des p - 1 tensions $V_n(q)$ pour $q$ allant de 1 $à$ $p$ - 1 et étant comprise entre la tension maximale $V_{max}$ et la tension minimale $V_{min}$, puis mesurer une puissance $P_i(p)$ générée par l'onduleur la i-ième entrée, et créer un p-ième point de mesure à ladite courbe « courant en fonction de tension » d'abscisse x = $V_n(p)$ et d'ordonnée y = $P_i(p)/V_n(p)$,

D. Calculer une variation de puissance dite résiduelle $\Delta P'$ à appliquer par ladite centrale photovoltaïque telle que $\Delta P' = \Delta P - (P_i(p) - P_i)$,
E. Si $\Delta P' \neq 0$ : annuler ladite variation de puissance résiduelle $\Delta P'$ en répartissant ladite variation sur des entrées différentes de la i-ième entrée,
F. Répéter les étapes C' à E une pluralité de fois en incrémentant p entre chaque itération, de manière à créer une pluralité de points de mesure de ladite courbe « courant en fonction de tension » mesurée.

**17.** Système selon la revendication précédente, comprenant en outre un capteur de température (Temp) adapté pour mesurer une température au niveau de ladite au moins une chaine photovoltaïque et/ou comprenant un capteur d'éclairement (PD) adapté pour mesurer un éclairement au niveau de ladite au moins une chaine photovoltaïque, ledit processeur étant en outre adapté pour corriger ladite courbe « courant en fonction de tension » à partir de mesures d'éclairement et/ou de mesures température effectuées pendant la mise en œuvre desdites étapes.

**Patentansprüche**

1. Einstell- und Messverfahren für ein Photovoltaikkraftwerk, das mindestens eine Photovoltaikkette (CP) umfasst, wobei jede Photovoltaikkette (CP) in Reihe geschaltete Solarpaneele (PV) umfasst und einen Wechselrichter (O) umfasst, der angepasst ist, um eine von der Photovoltaikkette erzeugte Gleichspannung in eine Wechselspannung umzuwandeln, wobei jeder Wechselrichter mindestens einen Gleichspannungseingang umfasst, wobei das Verfahren die folgenden Schritte umfasst:

   A. Messen einer Frequenz $f$ einer von dem Photovoltaikkraftwerk erzeugten Wechselspannung, Berechnen einer Frequenzänderung $\Delta f$ der Wechselspannung in Bezug auf eine vorbestimmte Referenzfrequenz $f_{ref}$, sodass: $\Delta f = f - f_{ref}$ und Berechnen einer Leistungsänderung $\Delta P$, die von dem Photovoltaikkraftwerk anhand der Frequenzänderung anzulegen ist,
   B. Wenn $\Delta P = 0$, Wiederholen von Schritt A, andernfalls: Auswählen eines Gleichspannungseingangs unter den M > 1 Gleichspannungseingängen, genannt i-ter Eingang, wobei i eine Ganzzahl von 1 bis M ist, um eine Messung der Kurve "Strom in Abhängigkeit von der Spannung" des i-ten Eingangs zu beginnen oder fortzusetzen, wobei der i-te Eingang eine sogenannte Anfangsgleichspannung $V_{ini}$ aufweist, dann Messen einer vom Wechselrichter des i-ten Eingangs erzeugten Leistung $P_i$, und Erstellen eines Messpunkts mit der Abszisse x = $V_{ini}$ und der Ordinate y = $P_i/V_{ini}$ an der Kurve "Strom in Abhängigkeit von der Spannung",
   C. Wenn ein Steuerbereich der Gleichspannung des i-ten Eingangs, der aus einer sogenannten maximalen Gleichspannung $V_{max}$ und einer sogenannten minimalen Gleichspannung $V_{min}$ des i-ten Eingangs gebildet wird, unbekannt ist: Bestimmen der maximalen Spannung $V_{max}$ und der minimalen Spannung $V_{min}$ des i-ten Eingangs durch Anlegen eines Spannungs- oder Leistungssollwerts am i-ten Eingang gemäß der Leistungsmessung $P_i$,
   C'.:

      - Anlegen einer Spannung $V_n(p)$ an den i-ten Eingang, wobei $p$ eine Ganzzahl zwischen 1 und $N > 1$ ist, die als Messpunkt bezeichnet wird, wobei sich die Spannung $V_n(p)$ von den $p$ - 1 Spannungen $V_n(q)$ für $q$ von 1 bis $p$ - 1 unterscheidet und zwischen der Maximalspannung $V_{max}$ und der Minimalspannung $V_{min}$ liegt, dann
      - Messen einer vom Wechselrichter des i-ten Eingangs erzeugten Leistung $P_i(p)$ und Erstellen eines p-ten Messpunkts an der Kurve "Strom in Abhängigkeit von der Spannung" mit der Abszisse x = $V_n(p)$ und der Ordinate y = $P_i(p)/V_n(p)$.

   D. Berechnen einer sogenannten Restleistungsänderung $\Delta P'$, die von dem Photovoltaikkraftwerk anzulegen ist, sodass $\Delta P' = \Delta P - (P_i(p) - P_i)$,
   E. Wenn $\Delta P' \neq 0$: Löschen der Restleistungsänderung $\Delta P'$ durch Aufteilung der Änderung auf sich vom i-ten Eingang unterscheidende Eingänge,
   F. Wiederholen der Schritte C' bis E eine Vielzahl von Malen, wobei p zwischen jeder Iteration inkrementiert wird, um eine Vielzahl von unterschiedlichen Messpunkten der gemessenen Kurve "Strom in Abhängigkeit von der Spannung" zu erzeugen.

2. Verfahren nach Anspruch 1, wobei, wenn eine Anzahl von erzeugten Messpunkten der Kurve "Strom in Abhängigkeit von der Spannung" des i-ten Eingangs am Ende von Schritt F gleich N ist, die Schritte A bis F wiederholt werden, indem i inkrementiert wird, um eine Messung der Kurve "Strom in Abhängigkeit von der Spannung" eines sich vom i-ten Eingang unterscheidenden Eingangs zu beginnen oder fortzusetzen.

3. Verfahren nach einem der Ansprüche 1 bis 2, wobei die Schritte A bis F wiederholt werden, indem i inkrementiert wird, um eine Messung der Kurve "Strom in Abhängigkeit von der Spannung" der M Eingänge zu beginnen oder fortzusetzen, bis N Messpunkte für jeden der M Eingänge erhalten werden.

4. Verfahren nach einem der Ansprüche 1 bis 3, wobei, wenn eine neue Frequenzänderung $\Delta f'$ der von dem Photovoltaikkraftwerk erzeugten Wechselspannung in Bezug auf die in Schritt F gemessene Referenzfrequenz $f_{ref}$ größer als ein vorbestimmter Schwellenwert $f_{lim}$ ist, die Schritte A bis F wiederholt werden.

5. Verfahren nach dem vorhergehenden Anspruch, wobei der vorbestimmte Frequenzschwellwert 5 mHz beträgt.

6. Verfahren nach einem der vorhergehenden Ansprüche, wobei die Schritte A-E des erfindungsgemäßen Verfahrens in einem vorbestimmten Zeitintervall implementiert werden.

7. Verfahren nach dem vorhergehenden Anspruch, wobei eine Dauer des vorbestimmten Zeitintervalls 10 s beträgt.

8. Verfahren nach einem der vorhergehenden Ansprüche, wobei, wenn $P_i \leq |\Delta P|$, der Schritt C darin besteht, eine Leerlaufspannung $V_{oc}$ des i-ten Eingangs zu bestimmen, wobei die maximale Spannung $V_{max}$ gleich der Leerlaufspannung $V_{oc}$ des i-ten Eingangs ist, wobei die minimale Spannung $V_{min}$ dann eine vorbestimmte Spannung des i-ten Eingangs ist.

9. Verfahren nach einem der vorhergehenden Ansprüche, wobei, wenn $P_i > |\Delta P|$, der Schritt C darin besteht, einen Leistungssollwert $P_i + \Delta P$ an den i-ten Eingang anzulegen, indem die Spannung erhöht wird, bis die maximale Spannung $V_{max}$ erreicht ist, wobei die minimale Spannung $V_{min}$ dann gleich $V_{ini}$ ist.

10. Verfahren nach einem der vorhergehenden Ansprüche, wobei die Leistungsänderung $\Delta P$ durch die folgende Gleichung berechnet wird: $\Delta P = -k \times \Delta f$, wobei k eine positive, parametrierbare Konstante ist, die einen von einem Betreiber des Photovoltaikkraftwerks angekündigten Beteiligungsgrad ausdrückt.

11. Verfahren nach einem der vorhergehenden Ansprüche, wobei Schritt E besteht aus:

    i. Anlegen von Leistungssollwerten an die sich vom i-ten Eingang unterscheidenden Eingänge, um eine von dem Kraftwerk erzeugte Leistung um einen Wert gleich der Restleistungsänderung $\Delta P'$ zu ändern, oder
    ii. Wiederholen der Schritte B bis D, indem i inkrementiert wird, und wobei $\Delta P = \Delta P'$, um eine Messung der Kurve "Strom in Abhängigkeit von der Spannung" eines Eingangs mit einer unterschiedlichen Spannung als dem i-ten Eingang zu beginnen oder fortzusetzen, wobei die Messung des i-ten Eingangs dann ausgesetzt wird.

12. Verfahren nach dem vorhergehenden Anspruch, wobei in Schritt E-i ein Wert $Pc_j$ des Leistungssollwerts jedes sich von $i$ unterscheidenden Eingangs j proportional zu einer von dem Eingang j erzeugten Leistung $P_j$ ist, sodass der Wert $Pc_j$ des Leistungssollwerts jedes Eingangs j gleich der folgenden Gleichung ist:

$$Pc_j = P_j + \frac{P_j}{\sum_{k \neq i} P_k} \times \Delta P'$$

13. Verfahren nach Anspruch 11, wobei in Schritt E-ii die Messungen von Kurven "Strom in Abhängigkeit von der Spannung" einer Vielzahl von Eingängen miteinander verglichen werden, indem der Messpunkt p gleichzeitig für alle Eingänge inkrementiert wird, von denen die Kurve "Strom in Abhängigkeit von der Spannung" gemessen wird.

14. Verfahren nach einem der vorhergehenden Ansprüche, umfassend einen Schritt zur Korrektur der Kurve "Strom in Abhängigkeit von der Spannung" auf der Grundlage von Beleuchtungsstärkemessungen und/oder Temperaturmessungen, die an dem mindestens einen Photovoltaikkraftwerk während der Implementierung der Schritte durchgeführt werden.

15. Verfahren nach einem der vorhergehenden Ansprüche, wobei die Anfangsspannung $V_{ini}$ des i-ten Eingangs eine Spannung ist, bei der eine von der Photovoltaikkette, die mit dem i-ten Eingang verbunden ist, erzeugte Leistung maximal ist.

16. Einstell- und Messsystem (1) für ein Photovoltaikkraftwerk, Folgendes umfassend:

    - mindestens eine Photovoltaikkette (CV) umfasst, wobei jede Photovoltaikkette in Reihe geschaltete Solarpaneele (PV) umfasst und einen Wechselrichter (O) umfasst, der angepasst ist, um eine von der Photovoltaikkette erzeugte Gleichspannung in eine Wechselspannung umzuwandeln, wobei jeder Wechselrichter mindestens einen Gleichspannungseingang umfasst,
    - Spannungssensoren (CT), die angepasst sind, um eine an jeden Wechselrichter angelegte Spannung zu messen,
    - einen Frequenzsensor (CF), der angepasst ist, um eine Frequenz f einer von dem Photovoltaikkraftwerk erzeugten Wechselspannung zu messen,
    - Leistungssensoren (CPV), die angepasst sind, um eine von dem Photovoltaikkraftwerk erzeugte Leistung und eine von jedem Wechselrichter erzeugte Leistung zu messen,
    - einen Prozessor (P), der angepasst ist, um die folgenden Schritte auszuführen:

        A. Messen der Frequenz f über den Frequenzsensor, Berechnen einer Frequenzänderung $\Delta f$ der Wechselspannung in Bezug auf eine vorbestimmte Referenzfrequenz $f_{ref}$ sodass: $\Delta f = f - f_{ref}$, Berechnen einer Leistungsänderung $\Delta P$, die von dem Photovoltaikkraftwerk anhand der Frequenzänderung anzulegen ist,
        B. Wenn $\Delta P = 0$, Wiederholen von Schritt A, andernfalls: Auswählen eines Gleichspannungseingangs unter den Gleichspannungseingängen, genannt i-ter Eingang, wobei i Ganzzahl i Ganzzahl von 1 bis M > 1 ist, um eine Messung der Kurve "Strom in Abhängigkeit von der Spannung" des i-ten Eingangs zu beginnen oder fortzusetzen, wobei der i-te Eingang eine sogenannte Anfangsgleichspannung $V_{ini}$ aufweist, dann Messen einer vom Wechselrichter des i-ten Eingangs erzeugten Leistung $P_i$,

und Erstellen eines Messpunkts mit der Abszisse x = $V_{ini}$ und der Ordinate y = $P_i$/$V_{ini}$ an der Kurve "Strom in Abhängigkeit von der Spannung",

C. Wenn ein Steuerbereich der Gleichspannung des i-ten Eingangs, der aus einer sogenannten maximalen Gleichspannung $V_{max}$ und einer sogenannten minimalen Gleichspannung $V_{min}$ des i-ten Eingangs gebildet wird, unbekannt ist: Bestimmen der maximalen Spannung $V_{max}$ und der minimalen Spannung $V_{min}$ des i-ten Eingangs durch Anlegen eines Spannungs- oder Leistungssollwerts am i-ten Eingang gemäß der Leistungsmessung $P_i$,

C'.:

> - Anlegen einer Spannung $V_n(p)$ an den i-ten Eingang, wobei $p$ eine Ganzzahl zwischen 1 und N > 1 ist, die als Messpunkt bezeichnet wird, wobei sich die Spannung $V_n(p)$ von den $p$ - 1 Spannungen $V_n(q)$ für $q$ von 1 bis $p$ - 1 unterscheidet und zwischen der Maximalspannung $V_{max}$ und der Minimalspannung $V_{min}$ liegt, dann Messen einer vom Wechselrichter der i-ten Eingang erzeugten Leistung $P_i(p)$ und Erstellen eines p-ten Messpunkts an der Kurve "Strom in Abhängigkeit von der Spannung" mit der Abszisse x = $V_n(p)$ und der Ordinate y = $P_i(p)$/$V_n(p)$,

D. Berechnen einer sogenannten Restleistungsänderung $\Delta P'$, die von dem Photovoltaikkraftwerk anzulegen ist, sodass $\Delta P' = \Delta P$ - ($P_i(p)$ - $P_i$),

E. Wenn $\Delta P' \neq 0$: Löschen der Restleistungsänderung $\Delta P'$ durch Aufteilung der Änderung auf sich vom i-ten Eingang unterscheidende Eingänge,

F. Wiederholen der Schritte C' bis E eine Vielzahl von Malen, wobei p zwischen jeder Iteration inkrementiert wird, um eine Vielzahl von Messpunkten der gemessenen Kurve "Strom in Abhängigkeit von der Spannung" zu erzeugen.

17. System nach dem vorhergehenden Anspruch, das ferner einen Temperatursensor (Temp) umfasst, der angepasst ist, um eine Temperatur an der mindestens einen Photovoltaikkette zu messen, und/oder einen Beleuchtungsstärkesensor (PD) umfasst, der angepasst ist, um eine Beleuchtungsstärke an der mindestens einen Photovoltaikkette zu messen, wobei der Prozessor ferner angepasst ist, um die Kurve "Strom in Abhängigkeit von der Spannung" anhand von Beleuchtungsstärkemessungen und/oder Temperaturmessungen, die während der Implementierung der Schritte durchgeführt werden, zu korrigieren.

## Claims

1. An adjusting and measuring method for a photovoltaic power plant comprising at least one photovoltaic string (CP), each photovoltaic string (CP) comprising solar panels (PV) connected in series and comprising an inverter (O) suitable for converting a DC voltage generated by said photovoltaic string into an AC voltage, each inverter comprising at least one DC-voltage input, said method comprising the following steps:

> A. measuring a frequency f of an AC voltage generated by said photovoltaic power plant, computing a frequency variation $\Delta f$ of said AC voltage with respect to a predetermined reference frequency $f_{ref}$ such that: $\Delta f = f - f_{ref}$ and computing a power variation $\Delta P$ to be applied by the photovoltaic power plant from said frequency variation,
>
> B. if $\Delta P = 0$, repeating step A, otherwise: selecting a DC-voltage input from the M > 1 DC-voltage inputs, referred to as the i-th input with i an integer ranging from 1 to M, in order to start or resume a measurement of a curve of "current as a function of voltage" of the i-th input, the i-th input having a so-called initial DC voltage $V_{ini}$, then measuring a power $P_i$ generated by the inverter of the i-th input, and creating a measurement point of abscissa x = $V_{ini}$ and of ordinate y = $P_i$/$V_{ini}$ on said curve of "current as a function of voltage",
>
> C. if a DC-voltage control range of the i-th input, formed of a so-called maximum DC voltage $V_{max}$ and of a so-called minimum DC voltage $V_{min}$ of the i-th input, is unknown: determining, by applying a voltage or power setpoint to the i-th input depending on said power measurement $P_i$, the maximum voltage $V_{max}$ and the minimum voltage $V_{min}$ of the i-th input,
>
> C'.:
>
>> - applying a voltage $V_n(p)$ to the i-th input, with p an integer comprised between 1 and $N > 1$ called the measurement point, said voltage $V_n(p)$ being different from the p - 1 voltages $V_n(q)$ for $q$ ranging from 1 to p - 1 and being comprised between the maximum voltage $V_{max}$ and the minimum voltage $V_{min}$, then
>> - measuring a power $P_i(p)$ generated by the inverter of the i-th input and creating a p-th measurement point on said curve of "current as a function of voltage" of abscissa x = $V_n(p)$ and of ordinate y = $P_i(p)/V_n(p)$,

D. computing a so-called residual power variation ΔP' to be applied by said photovoltaic power plant such that ΔP' = ΔP - ($P_i$(p) - $P_i$),
E. if ΔP' ≠ 0 : cancelling said residual power variation ΔP' by distributing said variation over inputs different from the i-th input,
F. repeating steps C' to E a plurality of times, incrementing p between each iteration, so as to create a plurality of different measurement points of said measured curve of "current as a function of voltage".

2. The method according to claim 1, wherein, when a number of created measurement points of said curve of "current as a function of voltage" of the i-th input is equal to N at the end of step F, steps A to F are repeated while incrementing i so as to start or resume a measurement of a curve of "current as a function of voltage" of an input different from the i-th input.

3. The method according to any one of claims 1 to 2, wherein steps A to F are repeated while incrementing i so as to start or resume a measurement of a curve of "current as a function of voltage" of the M inputs, until N measurement points have been obtained for each of the M inputs.

4. The method according to any one of claims 1 to 3, wherein, when a new frequency variation Δf' of said AC voltage generated by said photovoltaic power plant with respect to the reference frequency $f_{ref}$, measured in step F is greater than a predetermined threshold $f_{lim}$, steps A to F are repeated.

5. The method according to the preceding claim, wherein said predetermined frequency-threshold value is 5 mHz.

6. The method according to any one of the preceding claims, wherein steps A-E of the method of the invention are implemented in a predetermined time interval.

7. The method according to the preceding claim, wherein a duration of said predetermined time interval is equal to 10 s.

8. The method according to any one of the preceding claims, wherein, if $P_i$ ≤ |ΔP|, step C consists in determining an open-circuit voltage $V_{oc}$ of the i-th input, the maximum voltage $V_{max}$ being equal to the open-circuit voltage $V_{oc}$ of the i-th input, the minimum voltage $V_{min}$ then being a predetermined voltage of the i-th input.

9. The method according to any one of the preceding claims, wherein, if $P_i$ > |ΔP|, step C consists in applying a power setpoint $P_i$ + ΔP to the i-th input by increasing voltage until said maximum voltage $V_{max}$ is reached, the minimum voltage $V_{min}$ then being equal to $V_{ini}$.

10. The method according to any one of the preceding claims, wherein said power variation ΔP is computed using the following equation: ΔP = -k × Δf, with k a parameterisable positive constant expressing a level of commitment declared by an operator of the photovoltaic power plant.

11. The method according to any one of the preceding claims, wherein step E consists in:

   i. applying power setpoints to inputs different from the i-th input, so as to modify a power generated by said power plant by a value equal to said residual power variation ΔP', or
   ii. repeating steps B to D, while incrementing i, and with ΔP = ΔP', so as to start or resume a measurement of a curve of "current as a function of voltage" of a voltage input different from the i-th input, said measurement of the i-th input then being suspended.

12. The method according to the preceding claim, wherein, in step E-i, a value $Pc_j$ of said power setpoint of each input j different from i is proportional to a power $P_j$ generated by said input j such that said value $Pc_j$ of said power setpoint of each input j is equal to:

$$Pc_j = P_j + \frac{P_j}{\sum_{k \neq i} P_k} \times \Delta P'$$

13. The method according to claim 11, wherein, in step E-ii, measurements of curves of "current as a function of voltage" of a plurality of inputs are compared by incrementing the measurement point p simultaneously for all the inputs for which a curve of "current as a function of voltage" is being measured.

14. The method according to any one of the preceding claims, comprising a step of correcting said curve of "current as a function of voltage" based on illuminance measurements and/or temperature measurements performed at said at least one photovoltaic string during implementation of said steps.

15. The method according to any one of the preceding claims, wherein the initial voltage $V_{ini}$ of the i-th input is a voltage for which a power generated by the photovoltaic string associated with the i-th input is maximum.

16. An adjusting and measuring system (1) for a photovoltaic power plant comprising:

- at least one photovoltaic string (CV), each photovoltaic string comprising solar panels (PV) connected in series and comprising an inverter (O) suitable for converting a DC voltage generated by said photovoltaic string into an AC voltage, each inverter comprising at least one DC-voltage input,
- voltage sensors (CT) suitable for measuring a voltage applied to each inverter,
- a frequency sensor (CF) suitable for measuring a frequency f of an AC voltage generated by said photovoltaic power plant,
- power sensors (CPV) suitable for measuring a power generated by said photovoltaic power plant and a power generated by each inverter,
- a processor (P) suitable for executing the following steps:

A. measuring, via said frequency sensor, said frequency f, computing a frequency variation $\Delta f$ of said AC voltage with respect to a predetermined reference frequency $f_{ref}$ such that: $\Delta f = f - f_{ref}$, computing a power variation $\Delta P$ to be applied by the photovoltaic power plant from said frequency variation,

B. if $\Delta P = 0$, repeating step A, otherwise: selecting a DC-voltage input from the DC-voltage inputs, referred to as the i-th input with i integer i integer ranging from 1 to M > 1, in order to start or resume a measurement of a curve of "current as a function of voltage" of the i-th input, the i-th input having a so-called initial DC voltage $V_{ini}$, then measuring a power $P_i$ generated by the inverter of the i-th input, and creating a measurement point of abscissa $x = V_{ini}$ and of ordinate $y = P_i/V_{ini}$ at said curve of "current as a function of voltage",

C. if a DC-voltage control range of the i-th input, formed of a so-called maximum DC voltage $V_{max}$ and of a so-called minimum DC voltage $V_{min}$ of the i-th input, is unknown: determining, by applying a voltage or power setpoint to the i-th input depending on said power measurement $P_i$, the maximum voltage $V_{max}$ and the minimum voltage $V_{min}$ of the i-th input,

C'.:

- applying a voltage $V_n(p)$ to the i-th input, with p an integer comprised between 1 *and N* > 1 called the measurement point, said voltage $V_n(p)$ being different from the p - 1 voltages $V_n(q)$

for *q* ranging from 1 to p - 1 and being comprised between the maximum voltage $V_{max}$ and the minimum voltage $V_{min}$, then measuring a power $P_i(p)$ generated by the inverter the i-th input and creating a *p*-th measurement point on said curve of "current as a function of voltage" of abscissa $x = V_n(p)$ and of ordinate $y = P_i(p)/V_n(p)$,

D. computing a so-called residual power variation $\Delta P'$ to be applied by said photovoltaic power plant such that $\Delta P' = \Delta P - (P_i(p) - P_i)$,

E. if $\Delta P' \neq 0$ : cancelling said residual power variation $\Delta P'$ by distributing said variation over inputs different from the i-th input,

F. repeating steps C' to E a plurality of times, incrementing p between each iteration, so as to create a plurality of measurement points of said measured curve of "current as a function of voltage".

17. The system according to the preceding claim, further comprising a temperature sensor (Temp) suitable for measuring a temperature at said at least one photovoltaic string and/or comprising an illuminance sensor (PD) suitable for measuring an illuminance at said at least one photovoltaic string, said processor being further suitable for correcting said curve of "current as a function of voltage" based on illuminance measurements and/or temperature measurements performed during implementation of said steps.

Fig.1

Fig.2A

Fig.2B

A — calculer $\Delta P = -k \times \Delta f$   non

$\Delta P \neq 0$   oui

B — Sélectionner entrée $i$ → Mesurer $P_i$

Plage de pilotage en tension inconnue   oui / non

non   Si $P_i \leq |\Delta P|$   oui

C:
- Appliquer consigne en puissance $P_i + \Delta P$
- Atteindre tension maximale $V_{max}$
- Plage pilotage = $[V_{int}, V_{max}]$

- Déterminer tension de circuit ouvert $V_{oc}$
- $V_{max} = V_{oc}$
- Plage pilotage = $[V_{min}, V_{oc}]$

C':
- Appliquer nouvelle tension $V_p(p)$ à entrée $i$
- Mesurer $P_i(p)$

D — Calculer $\Delta P' = \Delta P - (P_i(p) - P_i)$

E — Répartir $\Delta P'$ sur les entrées $k \neq i$

Si $p = N$ ou $|\Delta f' - \Delta f| \geq f_{lim}$   non   F   $p = p+1$

$p = N$   oui   $i = i+1$

$i = M$

Fig.3

si $P_i \leq |\Delta P|$

$V_{ini}$

$1^{ere}$ étape = étape C

$V_{OC} = V_{max}$

$V_{max,s}$

$V_{min}$  N-ième étape  ...  $2^{eme}$ étape

$V_n(N)$  $V_n(2)$

Fig.4

si $P_i > |\Delta P|$

$V_{ini}$

$\Delta P$

$1^{ere}$ étape= étape C

$V_{max}$

$V_{ini}$

$1^{ere}$ étape = étape C

M-ième étape

$2^{eme}$ étape

$V_n(2)$

$V_n(N)$

Fig.5

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3349317 A1

- FR 3060229

**Littérature non-brevet citée dans la description**

- **D.C. JORDAN et al.** Compendium of Photovoltaic Degradation Rates. *NREL*, 2015